# EUROPEAN PATENT SPECIFICATION

(11) **EP 2 133 402 B1**
(45) Date of publication and mention of the grant of the patent: **05.10.2016**
(21) Application number: 09397517.5
(22) Date of filing: 05.06.2009
(51) Int. Cl.: C10J 3/54, C10J 3/56, C04B 2/10, F27B 7/20

(54) **METHOD OF TREATING LIME MUD**
VERFAHREN ZUR AUFBEREITUNG VON KALKSCHLAMM
PROCÉDÉ DE TRAITEMENT DE BOUE CALCAIRE

(30) Priority: 13.06.2008 FI 20085583
(43) Date of publication of application: 16.12.2009
(73) Proprietor: Valmet Technologies Oy, 02150 Espoo (FI)
(72) Inventor: Isaksson, Juhani, 33650 Tampere (FI); Kuukkanen, Kari, 33250 Tampere (FI)
(74) Representative: Tampereen Patenttitoimisto Oy

(56) References cited:
- FR-A1- 2 594 140
- E. KIISKILÄ: "Biomass gasification in an Ahlström Pyroflow gasifier replaces oil in lime kilns", VTT SYMPOSIUM SERIES 75, 1987, pages 76-89, XP8135249,

## Description

### Field of the invention

The invention relates to a method for treating lime mud.

### Background of the invention

Lime mud is calcium carbonate (CaCO₃) in a solid form. Lime mud is formed in the pulp manufacturing process in the manufacture of white liquor and it is separated from white liquor by filtering. A lime kiln, in turn, is an oven, where lime mud is burnt to calcium oxide, i.e. to burnt calcium (CaO) and carbon dioxide (CO₂), after which the calcium can be re-used in causticization.

Typically a lime kiln is a slightly tilted, horizontally rotating oven. The kiln is lined by bricks on the inside. The purpose of the lining is to decrease the heat losses of the kiln, as well as to protect the kiln from erosive chemicals. The kilns in use are 53 to 122 m in length and 2 to 4 m in diameter. Correspondingly, the capacity varies between 45 to 400 t CaO per day.

A conventional lime kiln can be divided into four different zones: The lime mud feed end comprises a drying zone, where the water contained by the lime mud is evaporated. Next is the heating zone, where the lime mud heats to the reaction temperature. After that is the reaction zone, where the calcium carbonate dissolves into calcium oxide and carbon dioxide. Last is the cooling zone, where the calcium is cooled before it is removed from the kiln.

The kiln comprises a burner, and by the temperature and size of its flame it is possible to affect, *inter alia,* the productions capacity of the kiln and the quality of the calcium. Oil or gas is generally used as fuel in the burners. In some solutions, a circulating fluidized bed gasifier, i.e. a CFB gasifier is used for gasifying bark or other biomass. The product gas formed in this replaces the natural gas or oil used as fuel in the lime kiln.

In known solutions, dolomite or sand is used as bed material in gasifiers. This bed material is ground and it flies partly all the way to the lime kiln, thus, for its part, causing fouling of lime mud and/or the end product. Similarly, a part of the ash of the fuel ends up in the lime kiln.

Because the thermal value of the product gas is small, a great amount of gas is needed for producing the necessary power.

Document FR 2594140 A1 describes a process where burnt limestone (CaO) is used as one constituent of the bed material in the gasifier. Document E.Kiiskilä: "Biomass gasification in an Ahlström Pyroflow gasifier replaces oil in lime kilns", VTT SYMPOSIUM SERIES 75, 1987, pages 76-89, describes the use of biomass as raw material for the gasifier.

### Brief summary of the invention

Now a solution has been invented, by which the purity of the end product of a lime kiln, i.e. burnt calcium can be improved when product gas gasified from biomass or other fuel is used as fuel.

To achieve this aim, the method according to the invention is primarily characterized in what will be presented in the independent claim 1. The other, dependent claims will present some preferred embodiments of the invention.

The basic idea of the invention is to use lime mud as bed material for a circulating fluidized bed gasifier. Lime mud is taken from the chemical circulation of a pulp mill after causticization before lime kiln. The material ground from bed material is calcium oxide, i.e. it corresponds to burnt calcium (CaO), in which case the bed material conveyed to the lime kiln does not cause fouling of the end product and thus the capacity of the lime kiln can be increased, if necessary.

The lime mud is conveyed to the lime kiln, where fuel gas is used as fuel. Fuel gas is formed by a circulating fluidized bed gasifier, where a part of the lime mud is used as bed material.

In an embodiment fuel gas is formed in the gasifier from bio-based or other materials. Bio-based fuels include, e.g. bark, wood chips, sawdust, straw, different logging waste and other organic waste, etc. Other fuels suitable for gasification include, for example, peat and waste paper.

A part of the lime mud is fed to the gasifier. Thus, lime mud is calcinated partly or entirely and is conveyed with product gas to the lime kiln. Thus, fouling of burnt calcium (CaO) decreases and the capacity of the lime kiln can be increased by calcinating a part of the lime mud already in the gasifier.

The different embodiments of the invention can be used as various configurations and in different environments.

### Description of the drawings

In the following, the invention will be described in more detail with reference to the appended principle drawings, in which
Fig. 1 shows a lime mud treatment plant not according to the invention.
Fig.2 shows a lime mud treatment plant acccording to the invention.

For the sake of clarity, the drawings only show the details necessary for understanding the invention. The structures and details that are not necessary for understanding the invention but are obvious for anyone skilled in the art have been omitted in the figures in order to emphasize the characteristics of the invention.

### Detailed description of the invention

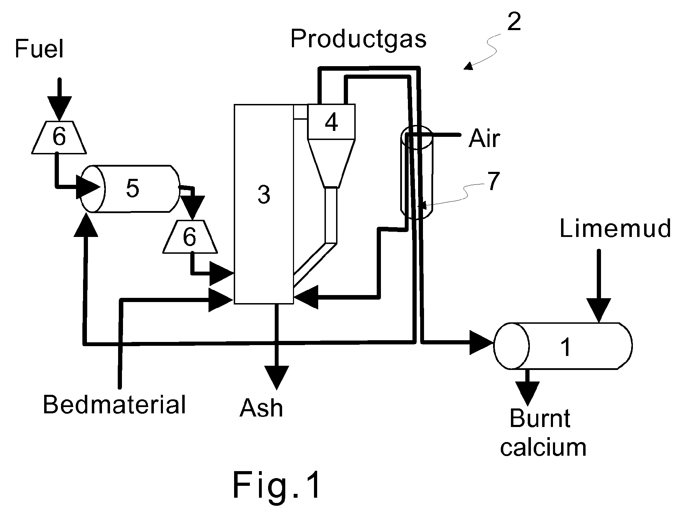

Figure 1 shows only those parts of a lime mud treatment plant that are necessary for understanding the invention. These include a lime kiln 1 and a gasifier unit 2. The gasifier unit 2 is a circulating fluidized bed gasifier, i.e. a CFB gasifier. The gasifier 2 comprises a process chamber 3, where air, fuel to be gasified and bed material are conveyed by suitable feeding structures. In the process chamber 3 the fuel is gasified into product gas. The gasifier unit 2 in addition comprises a separating unit 4, such as a cyclone, where bed material and ash are aimed to be separated from product gas. The separated bed material is circulated in the example back to the process chamber 3. Ash, in turn, is removed from the lower part of the gasifier. Product gas is conveyed from the gasifier 2 to the lime kiln 1. In practice, bed material and combustion residue is also conveyed to the lime kiln 1 with the product gas.

The gasification process is especially suitable for solid, bio-based fuels, such as bark, wood chips, sawdust, straw, different logging waste and other bio-based waste, etc. Other fuels, such as peat and waste paper, may also be used in gasification.

Calcium compound is used as bed material. The bed material fed to the gasifier unit 2 is fine-grained and at least a part of it is ground even finer in the gasifier. Fine bed material may be conveyed with the fuel gas being formed further to the lime kiln 1.

A conventional structure of a lime kiln 1 has already been described above. A lime kiln 1 comprises a burner, to which the product gas is conveyed from the gasifier. By the temperature and size of the flame of the burner it is possible to affect, *inter alia,* the production capacity of the kiln and the quality of the calcium. In addition, air and lime mud is conveyed to the lime kiln 1. Calcium and flue gases, in turn, exit the lime kiln 1. Typically flue gases are directed to a cleaning unit (not shown), such as, for example a flue gas scrubber.

By using a calcium compound as bed material in the gasifier 2, the amount of undesired material accumulating in the lime kiln 1 can be decreased. Burnt calcium is material produced in the lime kiln and the bed material ground in the gasifier and conveyed via the lime kiln 1 can therefore be utilized in the end product.

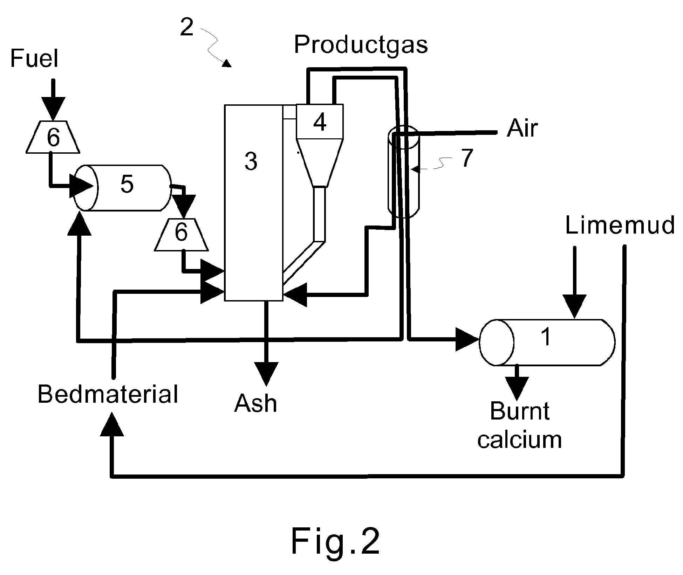

In the application of figure 2, a part of the lime mud is fed to the gasifier 2. The lime mud fed to the gasifier 2 advantageously operates as bed material. In an embodiment the entire bed material is formed of lime mud. In another application only a part of the bed material is formed of lime mud and the rest of the bed material is formed of calcium carbonate. calcium oxide and/or calcium hydroxide. In the process chamber 3 of the gasifier 2 the lime mud is calcinated partly or entirely. The calcinated lime mud is conveyed with the product gas to the lime kiln 1. With this solution it is possible to increase the capacity of the lime mud treatment plant.

In addition, the lime mud treatment plant advantageously comprises a drying unit 5 for fuel and fuel intermediate storages 6, as well as combustion air preheating 7.

## Claims

1. A method for treating lime mud, in which method lime mud is conveyed to a lime kiln, where fuel gas is used as fuel, which fuel gas is formed by a circulating fluidized bed gasifier,
**characterized in that** a part of the lime mud is fed to the gasifier where it is used as bed material for the gasifier.

2. The method according to claim 1, **characterized in that** the entire bed material in the gasifier is formed of lime mud.

3. The method according to claim 1, **characterized in that** part of the bed material is formed of lime mud and the rest of the bed material is formed of calcium carbonate, calcium oxide and/or calcium hydroxide.

4. The method according to any of the preceding claims,
**characterized in that** fuel gas is formed of a bio-based material in the gasifier.

5. The method according to any of the preceding claims,
**characterized in that** fuel gas is formed in the gasifier from at least one of the following fuels: bark, wood chips, sawdust, straw, logging waste, peat, waste paper.

## Patentansprüche

1. Verfahren zur Aufbereitung von Kalkschlamm, wobei Kalkschlamm zu einem Kalkbrennofen gefördert wird, wo Brenngas als Brennstoff verwendet wird, wobei das Brenngas durch einen Vergaser mit zirkulierender Wirbelschicht gebildet wird,
**dadurch gekennzeichnet, dass** ein Teil des Kalkschlamms dem Vergaser zugeführt wird, wo er als Bettmaterial für den Vergaser verwendet wird.

2. Verfahren nach Anspruch 1, **dadurch gekennzeichnet, dass** das gesamte Bettmaterial im Vergaser aus Kalkschlamm gebildet wird.

3. Verfahren nach Anspruch 1, **dadurch gekennzeichnet, dass** ein Teil des Bettmaterials aus Kalkschlamm gebildet wird und der Rest der Bettmaterials aus Calciumcarbonat, Calciumoxid und/oder Calciumhydroxid gebildet wird.

4. Verfahren nach irgendeinem der vorangehenden Ansprüche, **dadurch gekennzeichnet, dass** Brenngas aus einem biobasierten Material im Vergaser gebildet wird.

5. Verfahren nach irgendeinem der vorangehenden Ansprüche, **dadurch gekennzeichnet, dass** Brenngas im Vergaser aus mindestens einem der folgenden Brennstoffe gebildet wird: Rinde, Holzspänen, Sägemehl, Stroh, Schlagabraum, Torf, Altpapier.

## Revendications

1. Procédé de traitement de boue de chaux, dans lequel la boue de chaux est acheminée vers un four à chaux où du gaz combustible est utilisé comme combustible, lequel gaz combustible est formé par un gazogène à lit fluidisé circulant,
**caractérisé en ce qu'**une partie de la boue de chaux est introduite dans le gazogène où elle est utilisée en tant que matériau de lit destiné au gazogène.

2. Procédé selon la revendication 1, **caractérisé en ce que** la totalité du matériau du lit dans le gazogène est constituée de boue de chaux.

3. Procédé selon la revendication 1, **caractérisé en ce qu'**une partie du matériau du lit est constituée de boue de chaux et le reste du matériau du lit est constitué de carbonate de calcium, d'oxyde de calcium et/ou d'hydroxyde de calcium.

4. Procédé selon l'une quelconque des revendications précédentes,
**caractérisé en ce que** le gaz combustible est constitué d'un biomatériau dans le gazogène.

5. Procédé selon l'une quelconque des revendications précédentes,
**caractérisé en ce que** le gaz combustible se forme dans le gazogène à partir de l'un au moins des combustibles suivants : de l'écorce, des copeaux de bois, de la sciure, de la paille, des résidus d'exploitation forestière, de la tourbe et des déchets de papier.
